# EUROPEAN PATENT APPLICATION

(11) **EP 4 757 273 A1**
(43) Date of publication of application: **10.06.2026**
(21) Application number: 24848818.1
(22) Date of filing: 05.07.2024
(51) Int. Cl.: H04L 45/42, G06F 9/50, G06N 20/00, G16Y 30/00

(54) **SYSTEM, PROGRAM, AND EDGE DEVICE**

(30) Priority: 31.07.2023 JP 2023124744; 21.02.2024 JP 2024024921
(71) Applicant: Softbank Corp., Tokyo 105-7529 (JP)
(72) Inventor: KOMIYAMA, Yosuke, Tokyo 105-7529 (JP); ENOMOTO, Koyo, Tokyo 105-7529 (JP); KOBAYASHI, Kengo, Tokyo 105-7529 (JP); GOTO, Hiroki, Tokyo 105-7529 (JP)
(74) Representative: Meissner Bolte Partnerschaft mbB
(86) International application number: PCT/JP2024/024441
(87) International publication number: WO 2025/028159

(57) **Abstract**

This invention reduces a load on an edge device which is capable of collecting information and processing the information and which carries out an operation on the basis of the processed information, and reduces power consumption of the edge device. A system (100) includes: a first obtaining section (131) that obtains, from an edge device (4), a plurality of types of information collected by the edge device; a second obtaining section (132) that is capable of obtaining, from the edge device, request information for requesting execution of processing of specific information; a processing section (133) that processes the specific information among the plurality of types of information in a case where the second obtaining section obtains the request information; and a transmission control section (134) that transmits, in a case where the processing section processes the specific information, a result of the processing to the edge device.

## Description

### Technical Field

The present invention relates to a system, a program, and an edge device.

### Background Art

Conventionally, various technologies have been proposed relating to distribution of information processing functions in a communication network. For example, Patent Literature 1 discloses a planning node configured to deploy distributed functions to a distributed control system that includes a network and a plurality of communication devices facilitating an Internet of Things (IoT) system involving servers and edge computers. Patent Literature 1 also states that: the distributed functions of the planning node involve one or more of artificial intelligence (AI) functions or control functions facilitating the IoT system; the planning node includes a processor; and the processor is configured to gather requirements of the distributed functions constituting the distributed control system, information of the network, and information of the plurality of communication devices and generate a plan for deployment of the distributed functions to corresponding ones of the plurality of communication devices and allocation of network resources to the corresponding ones of the plurality of communication devices based on the gathered requirements and the information of the network.

### Citation List

### Patent Literature

Patent Literature 1
Japanese Patent Application Publication, Tokukai, No. 2022-032955

### Summary of Invention

### Technical Problem

However, the conventional function distribution technology as disclosed in Patent Literature 1 above is configured to distribute functions and network resources to a plurality of communication devices interposed between a server and a controlled device (a part of the edge computer). Therefore, even if a load on a part of the communication devices is reduced by the distribution, a load on a remaining one(s) of the communication devices increases. Specifically, in accordance with the conventional technique, a processing load on an input-output (I/O) control device (a part of the edge device) included in the communication devices is still large. In particular, in a case where the I/O control device is a device (e.g., a vehicle, a smartphone, a robot, or a drone) that includes a battery and is operable even without power supply from the outside, if the processing load is excessively large, this may directly cause a problem of power consumption.

### Solution to Problem

A system in accordance with an aspect of the present invention is a server including: a communication section that communicates with an edge device which is capable of collecting information and processing the information and which carries out an operation on a basis of the information thus processed; a first obtaining section that obtains, from the edge device via the communication section, a plurality of types of information having been collected by the edge device; a second obtaining section that is capable of obtaining, from the edge device via the communication section, request information for requesting execution of processing of specific information included in the plurality of types of information; a processing section that processes the specific information among the plurality of types of information in a case where the second obtaining section obtains the request information; and a transmission control section that controls, in a case where the processing section processes the specific information, the communication section to transmit a result of the processing to the edge device.

An edge device in accordance with another aspect of the present invention includes: a communication section that communicates with the above-described system; a collection section that collects a plurality of types of information; a first transmission control section that controls the communication section to transmit, to the system, position information of the edge device, radio quality information having been collected by the edge device, and capacity information indicative of a capacity of the plurality of types of information; a first obtaining section that obtains, from the system via the communication section, destination information and instruction information, the destination information being indicative of at least one destination to which the edge device transmits the plurality of types of information, and the instruction information being indicative of a part of the plurality of types of information which part is to be processed by the edge device; a second transmission control section that controls the communication section to transmit, to the system, request information based on the destination information and the instruction information; a processing section that processes information corresponding to the destination information, in a case where the destination information indicates the edge device as a destination; a second obtaining section that obtains, in a case where the system processes the specific information, a result of the processing by the system from the system via the communication section; and an operation control section that carries out an operation on a basis of a result of processing executed by at least one of the processing section and the system.

Each of the aspects of the present invention can be realized by a computer. In this case, the present invention encompasses: a program causing a computer to operate as the foregoing sections (software elements) of the server or the edge device so that the server or the edge device can be realized by the computer; and a computer-readable storage medium in which the program is stored.

### Brief Description of Drawings

Fig. 1 is a block diagram illustrating a configuration schematically illustrating a system in accordance with an embodiment of an aspect of the present invention and an edge device in accordance with an embodiment of another aspect of the present invention.
Fig. 2 is a block diagram illustrating a functional configuration of a first server (second server) constituting a processing server included in the system.
Fig. 3 is a view illustrating differences between the first server and the second server constituting the processing server.
Fig. 4 is a block diagram illustrating a functional configuration of an instruction server included in the system.
Fig. 5 is a table illustrating an example of a configuration in which the instruction server manages respondable times.
Fig. 6 is a table used by the instruction server to determine a destination of request information.
Fig. 7 is a view for explaining how the instruction server updates an instruction trained model.
Fig. 8 is a block diagram illustrating a functional configuration of the edge device shown in Fig. 1.
Fig. 9 is a flowchart illustrating a flow of a device control method in accordance with an embodiment of another aspect of the present invention.
Fig. 10 is a table used by an instruction server in accordance with a variation of the present invention to determine a destination of request information.
Fig. 11 is a table illustrating an example of a configuration in which the instruction server manages respondable times.
Fig. 12 is a diagram for explaining an operation of an edge device that communicates with a system in accordance with a modification of the present invention.

### Description of Embodiments

### System

First, the following will describe details of an embodiment of a system in accordance with an aspect of the present invention.

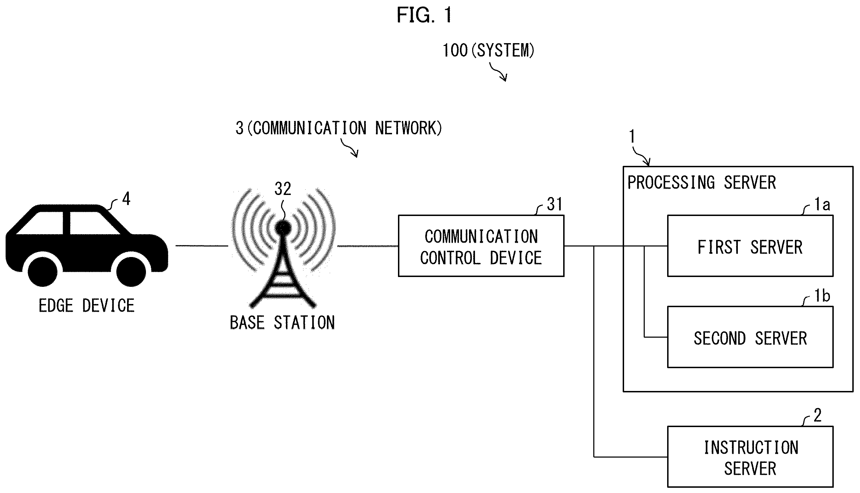

As illustrated in Fig. 1, a system 100 communicates with an edge device 4. The system 100 includes a processing server 1, an instruction server 2, and a communication network 3. Fig. 1 illustrates the system 100 that includes a single processing server 1. Alternatively, however, the system 100 may include a plurality of processing servers 1. Fig. 1 illustrates a case where the instruction server 2 is a constituent element of the system 100. Alternatively, however, the instruction server 2 may be implemented in the edge device 4. In this case, the instruction server 2 and the edge device 4 may directly communicate with each other, without going through the communication network 3. The edge device 4 may be realized in any form, as long as the edge device 4 can collect information, process the information, and carry out an operation on the basis of the information thus processed. Examples of the edge device 4 include a vehicle, a smartphone, a robot, and a drone. The following will describe details of the system 100 by taking an example case where a vehicle is used as the edge device 4.

### Communication Network

The communication network 3 enables communication between the processing server 1 and the edge device 4 and communication between the instruction server 2 and the edge device 4. The communication network 3 also enables communication between the processing server 1 and the instruction server 2 that constitute the system 100. The communication network 3 includes a communication control device 31 and a base station(s) 32. That is, the processing server 1 and the instruction server 2 in accordance with the present embodiment communicate with the edge device 4 by a cellular system. The communication network 3 in accordance with the present embodiment includes a plurality of base stations 32. The communication network 3 in accordance with the present embodiment is managed by a communication carrier. That is, the communication network 3 is not dedicated to communication of the edge device 4, but also enables communication between other communication devices (for example, between a mobile phone(s), a tablet terminal(s), and/or the like). Thus, due to congestion, the communication network 3 may decrease communication speed of at least either of (a) the communication between the processing server 1 and the edge device 4 or (b) the communication between the instruction server 2 and the edge device 4.

The communication control device 31 collects, at regular intervals, position information of a base station 32, radio quality information collected by the base station 32, and a transmission delay time. The position information of the base station 32 is information for identifying the base station 32 which is a counterpart of the communication (e.g., PCI, ECGI). In a case where the base station 32 and the communication control device 31 have a function of determining a position of the edge device 4 (e.g., NR positioning), the position information of the base station 32 may further include the determined position information of the edge device 4. Meanwhile, in a case where the base station 32 and the communication control device 31 do not have the function of determining the position of the edge device 4, a transmission delay time in a radio section may be used instead of the position information. The radio quality information collected by the base station 32 includes an uplink error rate, the number of simultaneous connections, a usage rate of radio resource blocks, and/or the like. In a case where the base station 32 and the communication control device 31 have a function of collecting and notifying radio quality information collected by the edge device 4, the radio quality information collected by the base station 32 may further include the radio quality information collected by the edge device 4. The radio quality information collected by the edge device 4 includes a radio wave strength, a radio wave quality, a downlink error rate, and/or the like. The transmission delay time is a transmission delay time in a wired section between the communication control device 31 and the processing server 1. The communication control device 31 in accordance with the present embodiment may be configured to collect a radio wave modulation scheme and/or the like.

### Processing Server

The processing server 1 is a computer that is capable of collecting information and processing the information. The processing server 1 in accordance with the present embodiment includes a first server 1a and a second server 1b. The first server 1a can be configured by, for example, a multi-access edge computer (MEC) managed by a communication company. The second server 1b can be configured by, for example, a cloud server managed by a company that provides a cloud service. The processing server 1 does not have to be divided into the first server 1a and the second server 1b. Alternatively, the processing server 1 may be divided into three or more. The first server 1a and the second server 1b both may be MECs or both may be cloud servers.

At least one of the first server 1a and the second server 1b in accordance with the present embodiment is a renewable energy-powered server that operates using electric power supplied from a generator that generates electric power using renewable energy. Examples of the generator that generates electric power using renewable energy include solar panels, wind power generators, hydroelectric power generators, geothermal power generators, and wave power generators. With such a configuration, it is possible to reduce carbon dioxide emissions as compared with a configuration that operates using electric power supplied from a generator that generates electric power using fossil fuels. Both the first server 1a and the second server 1b in accordance with the present embodiment are renewable energy-powered servers. The first server 1a and the second server 1b in accordance with the present embodiment switch, on the basis of a power supply status, a power supply source to the generator that generates electric power using renewable energy or to the generator that generates electric power using fossil fuels. The power supply status includes at least one of an operating status of the generator and a power storage status of a storage battery connected to the generator. It should be noted that at least one of the first server 1a and the second server 1b may include a renewable energy-powered server and a server that operates using electric power supplied from a generator that generates electric power using fossil fuels. Further, both the first server 1a and the second server 1b may be servers that operate using electric power supplied from a generator that generates electric power using fossil fuels. The following will describe a specific configuration of the first server 1a, and then will describe differences between the second server 1b and the first server 1a.

### First Server

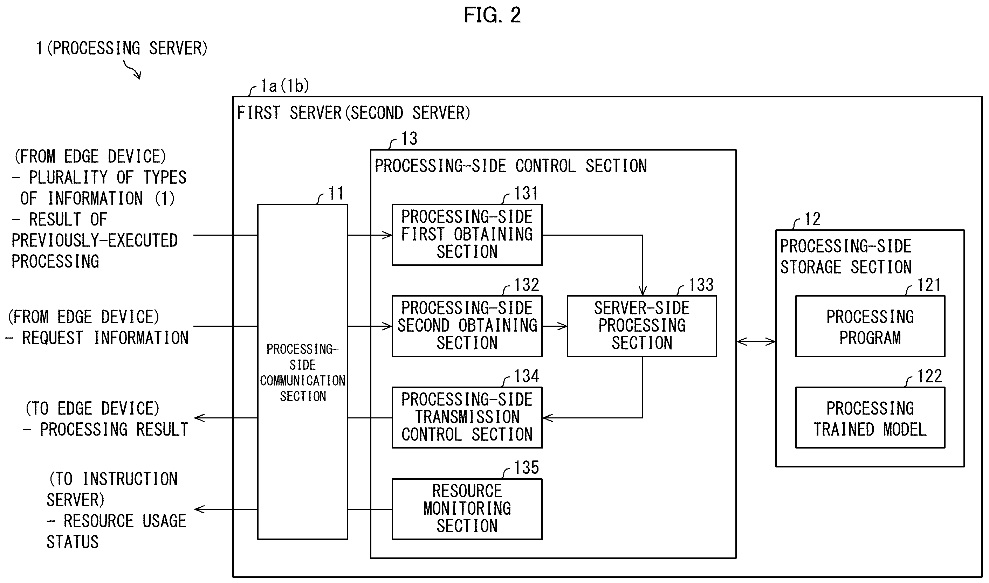

As illustrated in Fig. 2, the first server 1a includes a processing-side communication section 11 (communication section), a processing-side storage section 12, and a processing-side control section 13.

### Processing-Side Communication Section

The processing-side communication section 11 communicates with the edge device 4. The processing-side communication section 11 in accordance with the present embodiment wirelessly communicates with the edge device 4 through the communication network 3. The processing-side communication section 11 in accordance with the present embodiment also communicates with the instruction server 2. The processing-side communication section 11 in accordance with the present embodiment is constituted by a communication module.

### Processing-Side Storage Section

The processing-side storage section 12 stores a processing program 121 therein. The processing-side storage section 12 in accordance with the present embodiment also stores a processing trained model 122 therein. The processing-side storage section 12 in accordance with the present embodiment is constituted by a semiconductor memory, a hard disk, or the like.

The processing program 121 describes an operation of the processing-side control section 13 of the first server 1a. The processing program 121 also defines (a) what kinds and forms of specific information (details thereof will be described later) exist, (b) how to process each piece of specific information, (c) a processing time per computing resource for each type of information, (d) in what form each piece of specific information is to be output, etc. The computing resources include a usage rate of a graphics processing unit (GPU), a usage rate of a central processing unit (CPU), a usage rate of a memory, and/or the like.

The processing trained model 122 is used for processing information. The processing of information using the processing trained model 122 includes, for example, object detection based on image data, vehicle type identification based on image data, and/or the like. That is, the processing trained model 122 includes, for example, one constructed by carrying out machine learning of a relation between (a) image data generated by capturing an image of at least one of an outside and an inside of the edge device 4 in the past and (b) an object shown in an image based on the image data.

### Processing-Side Control Section

The processing-side control section 13 includes a processing-side first obtaining section 131 (first obtaining section), a processing-side second obtaining section 132 (second obtaining section), a server-side processing section 133 (processing section), a processing-side transmission control section 134 (transmission control section), and a resource monitoring section 135. The processing-side control section 13 in accordance with the present embodiment is constituted by a processor. When this processor executes the processing program 121 stored in the processing-side storage section 12, the processing program 121 can cause the processing-side control section 13 to function as the control blocks 131 to 135.

### Processing-Side First Obtaining Section

The processing-side first obtaining section 131 obtains at least one of a plurality of types of information (a plurality of types of information (1)) collected by the edge device 4 from the edge device 4 via the processing-side communication section 11. The plurality of types of information (1) include information (e.g., image data, a driving log, and/or various types of information having been accepted) generated by an information obtaining section 44 (details thereof will be described later) included in the edge device 4. The processing-side first obtaining section 131 in accordance with the present embodiment is capable of obtaining, as one of the plurality of types of information, information whose data capacity has been reduced by the edge device 4. The information whose data capacity has been reduced includes information such as compressed information and/or information on which a part of the processing has been carried out. Consequently, for example, even in a case where the data capacity of information has been reduced by the edge device 4, that information can be obtained by the processing-side first obtaining section 131. For this reason, the processing-side first obtaining section 131 can obtain information that is too large to be transmitted and received as it is.

The processing-side first obtaining section 131 in accordance with the present embodiment can obtain a result of previous processing from the edge device 4 via the processing-side communication section 11. The result of the previous processing can be obtained in a case where processing of the plurality of types of information is executed by the processing server 1 (at least one of the first server 1a and the second server 1b) and a result of processing similar to previously-executed processing is necessary to execute the processing (hereinafter, such a result will be referred to as a "previous processing result"). This eliminates the need for the processing server 1 (at least one of the first server 1a and the second server 1b) to maintain a state (i.e., the processing server 1 becomes stateless). As a result, the processing capability can be easily enhanced by scaling out, or even when the edge device 4 moves, processing can be continued using a processing server 1 located nearby.

The processing-side first obtaining section 131 in accordance with the present embodiment may obtain other information useful for the operation of the edge device 4 from another device via the processing-side communication section 11. The other information includes information such as information collected by another edge device 4 and/or image data generated by a surveillance camera installed near a road.

### Processing-Side Second Obtaining Section

The processing-side second obtaining section 132 is capable of obtaining request information from the edge device 4 via the processing-side communication section 11. The request information is information for requesting execution of processing of specific information included in the plurality of types of information. Details of the specific information will be described later.

### Server-Side Processing Section

The server-side processing section 133 processes the specific information among the plurality of types of information when the processing-side second obtaining section 132 obtains the request information. The processing includes real-time processing and non-real-time processing. The real-time processing is processing for which a required response time is set. The required response time refers to an upper limit of a time allowed from a time point that the edge device 4 starts transmission control on information to a time point that the edge device 4 obtains a result of corresponding processing. The real-time processing includes recognition-type processing and control-type processing. The recognition-type processing includes object detection based on image data, vehicle type identification based on image data, object detection based on Light Detection And Ranging (LiDAR), position estimation of the edge device 4 based on LiDAR, and/or the like. The control-type processing includes determination of a global route plan, determination of a local route plan, steering/speed control, and/or the like. The non-real-time processing is processing for which a required response time is not set. The server-side processing section 133 selects, from among these types of processing, processing in accordance with a content of the request information, and executes the selected processing. It should be noted that, in a case where the processing-side second obtaining section 132 has not obtained the request information, the server-side processing section 133 would not operate.

In a case where the processing-side first obtaining section 131 obtains other information useful for the operation of the edge device 4, the server-side processing section 133 in accordance with the present embodiment processes the specific information using the other information. Specifically, for example, in carrying out object detection based on image data, verification as to whether an object actually exists is carried out by referring to image data from a surveillance camera that captures an image of an area where the object is supposed to exist. Consequently, the server-side processing section 133 can execute more advanced processing than the one that does not use the other information.

### Processing-Side Transmission Control Section

In a case where the server-side processing section 133 processes the specific information, the processing-side transmission control section 134 controls the processing-side communication section 11 to transmit a processing result to the edge device 4. Meanwhile, in a case where the server-side processing section 133 has not processed the specific information, the processing-side transmission control section 134 would not operate.

### Resource Monitoring Section

The resource monitoring section 135 collects a usage status of computing resources of the first server 1a (hereinafter, such a usage status will be referred to as a "resource usage status"). Then, the resource monitoring section 135 transmits the collected resource usage status to the instruction server 2 via the processing-side communication section 11. Consequently, the instruction server 2 can estimate a respondable time (details thereof will be described later) when requesting the first server 1a to process information.

### Second Server

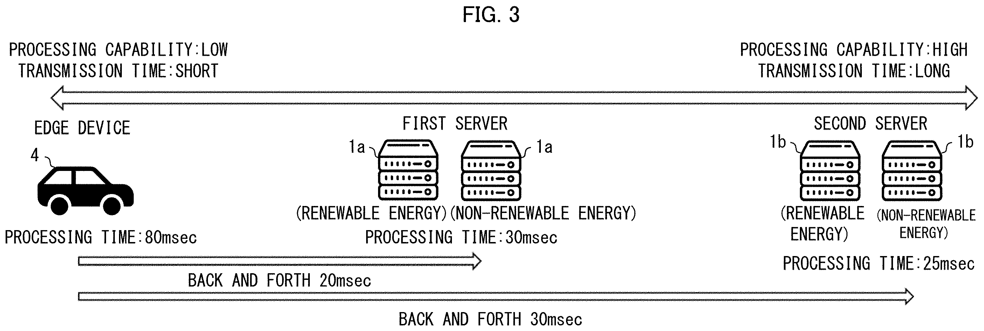

As illustrated in Fig. 3, in the second server 1b in accordance with the present embodiment, a time required for the processing-side first obtaining section 131 to obtain information is longer than that in the first server 1a, and a time required for the server-side processing section 133 to process information is shorter than that in the first server 1a. In other words, in the first server 1a in accordance with the present embodiment, a time required for the processing-side first obtaining section 131 to obtain information is relatively shorter (than in the second server 1b), and a time required for the server-side processing section 133 to process information is relatively longer (than in the second server 1b).

### Instruction Server

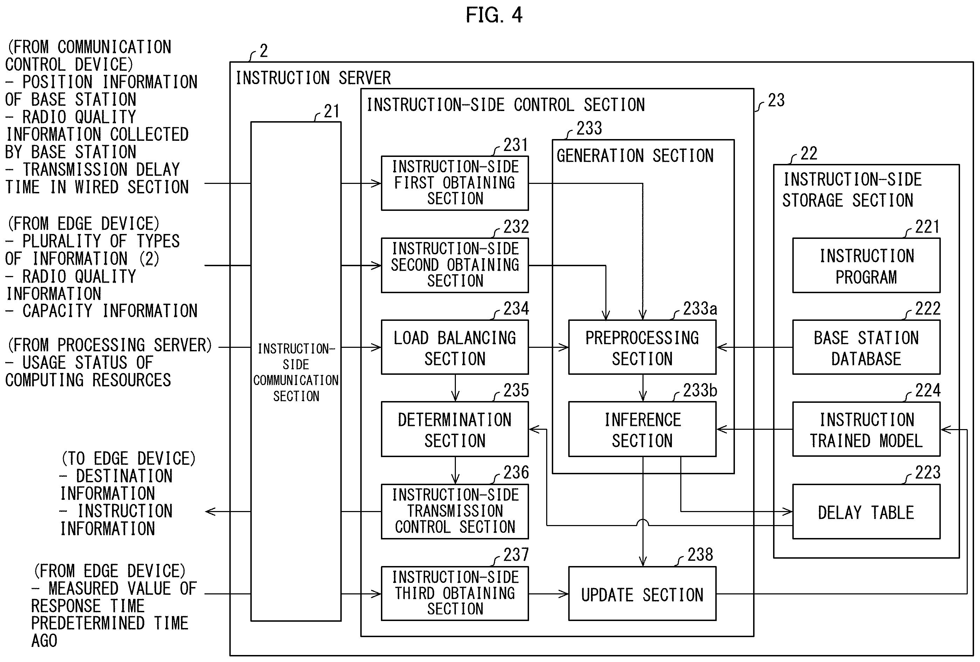

The instruction server 2 is a computer that gives the edge device 4 an instruction(s) as to an upload destination of information and/or a content of the processing on the information. As illustrated in Fig. 4, the instruction server 2 includes an instruction-side communication section 21, an instruction-side storage section 22, and an instruction-side control section 23.

### Instruction-Side Communication Section

The instruction-side communication section 21 communicates with the edge device 4. The instruction-side communication section 21 in accordance with the present embodiment wirelessly communicates with the edge device 4 via the communication network 3. The instruction-side communication section 21 in accordance with the present embodiment also communicates with the processing server 1. The instruction-side communication section 21 in accordance with the present embodiment also communicates with the communication control device 31 of the communication network 3. The instruction-side communication section 21 in accordance with the present embodiment is constituted by a communication module.

### Instruction-Side Storage Section

The instruction-side storage section 22 stores an instruction program 221 therein. The instruction-side storage section 22 in accordance with the present embodiment also stores a base station database 222, a delay table 223, and an instruction trained model 224 (trained model) therein. The instruction-side storage section 22 in accordance with the present embodiment is constituted by a semiconductor memory, a hard disk, or the like.

The instruction program 221 describes an operation of the instruction-side control section 23 of the instruction server 2. The instruction program 221 also defines (a) what kinds and forms of specific information exist and (b) a processing time per computing resource in accordance with the type of specific information.

The base station database 222 stores therein base station data, which is static data of each of the plurality of base stations 32. Each piece of base station data includes position information of the base station 32 (PCI, ECGI, etc. of the base station 32).

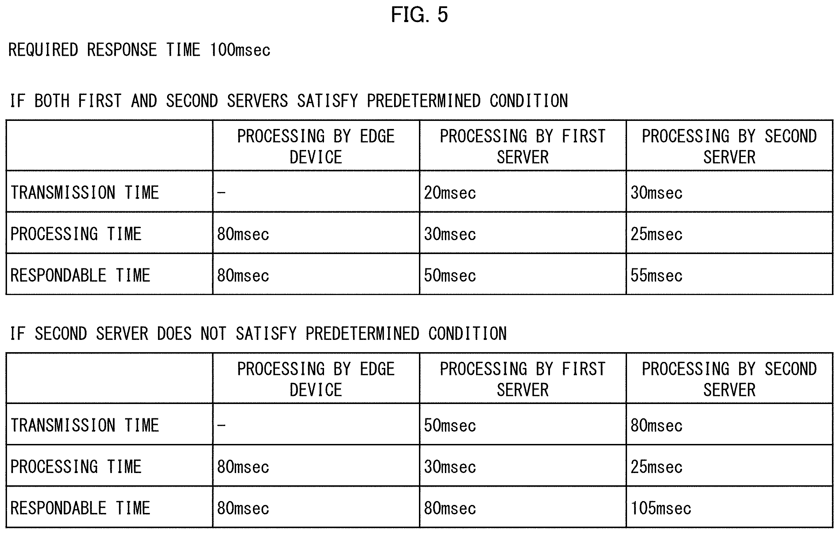

The delay table 223 is, for example, the one as illustrated in Fig. 5, specifically a list of (a) respondable times observed when processing of the information is executed by the edge device 4 and (b) respondable times observed when processing of the information is executed by the processing server 1. The respondable time refers to a time required from a time point that the edge device 4 (a device-side second transmission control section 435) starts transmission control to a time point that the edge device 4 (a device-side second obtaining section 436) obtains a result of corresponding processing. As described above, the processing server 1 in accordance with the present embodiment is divided into the first server 1a and the second server 1b. Therefore, the delay table 223 in accordance with the present embodiment is a list of (a) respondable times observed when the processing is executed by the edge device 4, (b) respondable times observed when the processing is executed by the first server 1a, and (c) respondable times observed when the processing is executed by the second server 1b. The delay table 223 in accordance with the present embodiment indicates details of the respondable times. In the details, a transmission time and a processing time are included. The processing time is a time required for the processing server 1 and the edge device 4 to process the information. The delay table 223 only needs to include at least the respondable time. Thus, it is not always necessary that the delay table 223 includes the respondable time divided into the transmission time and the processing time.

The instruction trained model 224 is constructed by carrying out machine learning of a relation between (a) position information of the base station 32, (b) position information of the edge device 4, (c) a distance of a radio section (between the edge device 4 and the base station 32) or a transmission delay time in the radio section, (d) radio quality information collected by the base station 32, (e) radio quality information collected by the edge device 4, (f) a transmission delay time in a wired section between the communication control device 31 and the processing server 1, (g) a data capacity of processed information, and (h) a response time (details thereof will be described later) having been taken for communication between the processing server 1 and the edge device 4 during the processing, each of these pieces of information having been obtained in past communication. As described above, the processing server 1 in accordance with the present embodiment is divided into the first server 1a and the second server 1b. Thus, the instruction trained model 224 in accordance with the present embodiment is constructed by carrying out machine learning of a relation to which a resource usage status of the processing server 1 is further added to the above-described relation. The instruction-side storage section 22 in accordance with the present embodiment stores a plurality of instruction trained models 224 corresponding to the respective plurality of types of information.

### Instruction-Side Control Section

As illustrated in Fig. 4, the instruction-side control section 23 includes an instruction-side first obtaining section 231, an instruction-side second obtaining section 232, a generation section 233, a load balancing section 234, a determination section 235, an instruction-side transmission control section 236 (second transmission control section), an instruction-side third obtaining section 237, and an update section 238. The instruction-side control section 23 in accordance with the present embodiment is constituted by a processor. When this processor executes the instruction program 221 stored in the instruction-side storage section 22, the instruction program 221 can cause the instruction-side control section 23 to function as the control blocks 231 to 238.

### Instruction-Side First Obtaining Section

The instruction-side first obtaining section 231 obtains position information of the base station 32 and radio quality information collected by the base station 32 from the communication control device 31 via the instruction-side communication section 21. The instruction-side first obtaining section 231 also obtains a transmission delay time in a wired section from the communication control device 31 via the instruction-side communication section 21.

### Instruction-Side Second Obtaining Section

The instruction-side second obtaining section 232 obtains a plurality of types of information (2) from the edge device 4 via the instruction-side communication section 21. The plurality of types of information (2) include position information of the edge device 4, route information of the edge device 4, a physical cell ID (PCI) of a base station 32 which is a counterpart of the communication, and an E-UTRAN cell global identifier (ECGI) of the communicating base station 32. The instruction-side second obtaining section 232 further obtains radio quality information collected by the edge device 4 from the edge device 4 via the instruction-side communication section 21. The instruction-side second obtaining section 232 further obtains capacity information indicative of a data capacity of information from the edge device 4 via the instruction-side communication section 21. In a case where the information obtained by the instruction-side first obtaining section 231 (the position information of the base station 32 collected by the base station 32, the radio quality information collected by the base station 32) includes the information obtained by the instruction-side second obtaining section 232 (the position information of the edge device 4, the radio quality information collected by the edge device 4, and at least one of the PCI and ECGI of the communicating base station 32), the instruction-side second obtaining section 232 does not have to obtain the information included in the information obtained by the instruction-side first obtaining section 231.

### Load Balancing Section

The load balancing section 234 obtains a resource usage status of the first server 1a and a resource usage status of the second server 1b from the first server 1a and the second server 1b, respectively.

### Generation Section

The generation section 233 generates a respondable time for each of the plurality of types of information on the basis of data necessary to generate the respondable time. The data necessary to generate the respondable time is the position information of the base station 32, the radio quality information collected by the base station 32, the transmission delay time in the wired section, the plurality of types of information (2), the radio quality information collected by the edge device 4, and the capacity information. As described above, the processing server 1 in accordance with the present embodiment is divided into the first server 1a and the second server 1b. Thus, the generation section 233 in accordance with the present embodiment further generates, on the basis of the resource usage status, a respondable time observed when the processing is executed by the first server 1a and a respondable time observed when the processing with respect to each of the plurality of types of information is executed by the second server 1b. The generation section 233 in accordance with the present embodiment generates the respondable time using the instruction trained model 224. Thus, the generation section 233 in accordance with the present embodiment includes a preprocessing section 233a and an inference section 233b.

The preprocessing section 233a preprocesses various types of information into a format that can be input to the instruction trained model 224. The various types of information are the position information (PCI, ECGI) of the base station 32, the radio quality information collected by the base station 32, the transmission delay time in the wired section, the plurality of types of information (2) collected by the edge device 4, the radio quality information and the capacity information collected by the edge device 4, and the resource usage status. With regard to the PCI and ECGI of the base station 32 which is the counterpart of the communication, the preprocessing section 233a first generates a pair of the edge device 4 and the base station 32 on the basis of these pieces of information. Then, on the basis of the respective pieces of position information of the edge device 4 and the base station 32 forming the pair, the preprocessing section 233a calculates, as one piece of information to be input to the inference section 233b, an estimated value of the distance of the radio section. The preprocessing section 233a may estimate the distance of the radio section from the transmission delay time of the radio section.

The inference section 233b inputs the pieces of preprocessed information to the instruction trained model 224 and causes the instruction trained model 224 to output an inferred value of the respondable time. This makes it possible to easily obtain the inferred value on the basis of past information. When the generation section 233 generates a respondable time, the generation section 233 updates the respondable time in the corresponding delay table 223.

### Determination Section

The determination section 235 determines whether or not a predetermined requirement is satisfied for each of the plurality of types of information. The determination section 235 in accordance with the present embodiment determines that the predetermined requirement is satisfied, if both of the following conditions (1) and (2) are satisfied:
(1) No abnormal situation has occurred in the processing server 1.
(2) A respondable time of the processing server 1 is shorter than a predetermined required response time, or no required response time is set for the information to be processed.

Examples of the abnormal situation include: disconnection of communication between the processing server 1 and the edge device 4; and a stoppage of operation of the processing server 1.

As described above, the processing server 1 in accordance with the present embodiment is divided into the first server 1a and the second server 1b. Thus, for each of the case where the processing is executed by the first server 1a and the case where the processing is executed by the second server 1b, the determination section 235 determines whether or not the predetermined requirement is satisfied. For example, consider a case where the information is image data (i.e., the processing is the object detection based on image data) and the required response time is set at 100 msec. Then, if the obtained delay table 223 is as illustrated in the upper part of Fig. 5 (i.e., the processing time of the first server 1a is, for example, 50 msec and the processing time of the second server 1b is, for example, 55 msec), the determination section 235 determines that the predetermined requirement is satisfied in both the case where the processing is executed by the first server 1a and the case where the processing is executed by the second server 1b. Meanwhile, if the obtained delay table 223 is as illustrated in the lower part of Fig. 5 (i.e., the processing time of the first server 1a is, for example, 80 msec and the processing time of the second server 1b is, for example, 105 msec), the determination section 235 determines that (a) the predetermined requirement is satisfied in the case where the processing is executed by the first server 1a and (b) the predetermined requirement is not satisfied in the case where the processing is executed by the second server 1b.

Furthermore, the determination section 235 generates destination information and instruction information on the basis of a result of determination as to whether or not the predetermined requirement is satisfied. The destination information is information indicative of a destination to which the edge device 4 transmits the plurality of types of information. The content (destination) of this destination information is changed in accordance with the content of the processing. The instruction information is information indicative of a part of the plurality of types of information which part is to be processed by the edge device 4. That is, the instruction information defines whether to transmit all pieces of data or to transmit intermediate data on which a part of processing has been executed.

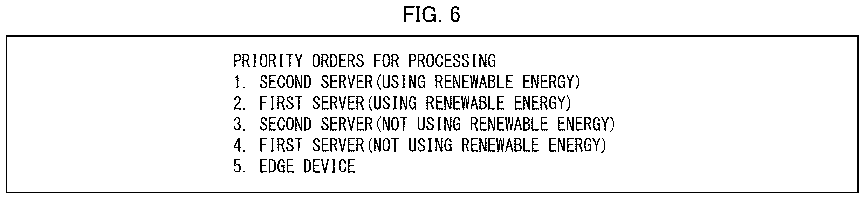

The determination section 235 in accordance with the present embodiment determines the content (destination) of the destination information in accordance with predetermined priority orders as illustrated in, for example, Fig. 6. The determination section 235 in accordance with the present embodiment generates the destination information in accordance with the priority orders based on the processing time and the power supply source. For example, in a case where the required response time is set at 100 msec and the delay table 223 as illustrated in the upper part of Fig. 5 is obtained (in a case where the predetermined requirement is satisfied in both the case where the processing is executed by the first server 1a and the case where the processing is executed by the second server 1b), the determination section 235 generates destination information that defines, as a destination, the second server 1b, which is a renewable energy-powered server and has a shorter processing time. Meanwhile, in a case where the required response time is set at 100 msec and the delay table 223 as illustrated in the lower part of Fig. 5 is obtained, the second server 1b does not satisfy the predetermined requirement and cannot define the second server 1b as a destination. Thus, the determination section 235 generates destination information that defines, as a destination, the first server 1a, which is a renewable energy-powered server. In a case where the processing server 1 (both the first server 1a and the second server 1b) does not satisfy the predetermined requirement, the determination section 235 in accordance with the present embodiment generates destination information including the edge device 4 as a destination.

In the description here, in a case where there are a plurality of destinations in which the respondable time is shorter than the required response time, the renewable energy-powered server is prioritized. Alternatively, however, a server which is to be prioritized may be determined according to another policy (for example, a magnitude of processing cost) other than the presence or absence of use of renewable energy. If the determination section 235 executes such processing, the edge device 4 only needs to process, by itself, only information for which the respondable time exceeds the required response time. Thus, even with a configuration in which the processing is shared between the processing server 1 and the edge device 4, there is no concern that the processing of the processing server 1 will not be in time and the operation of the edge device 4 will be hindered.

In a case where the generation section 233 is configured to generate the respondable time not on the basis of the resource usage status, the determination section 235 may be configured to determine that the predetermined requirement is satisfied, if the condition (3) "a computing resource is sufficient" is satisfied, in addition to the conditions (1) and (2). With such a configuration, the determination section 235 may generate destination information that indicates, as destinations, the processing server 1 (the system 100) and the edge device 4 and instruction information that instructs the edge device 4 to process a shortage of the computing resources, if the conditions (1) and (2) are satisfied but the condition (3) is not satisfied. With such a configuration, in a case where only the condition (3) is not satisfied, only the shortage of the computing resources of the processing server 1 is processed by the edge device 4 and the remaining processing can be executed by the processing server 1. That is, it is possible to effectively utilize the computing resources of the processing server 1 which are not used in principle when the predetermined requirement is not satisfied.

### Instruction-Side Transmission Control Section

As illustrated in Fig. 4, the instruction-side transmission control section 236 controls the instruction-side communication section 21 to transmit, to the edge device 4, the destination information and the instruction information generated by the determination section 235.

### Instruction-Side Third Obtaining Section

For each of the plurality of types of information, the instruction-side third obtaining section 237 obtains, from the edge device 4 via the instruction-side communication section 21, a measured value of a response time a predetermined time ago. The response time refers to a time from a time point that the edge device 4 transmits the plurality of types of information and the request information to the processing server 1 to a time point that the edge device 4 receives a result of the processing.

### Update Section

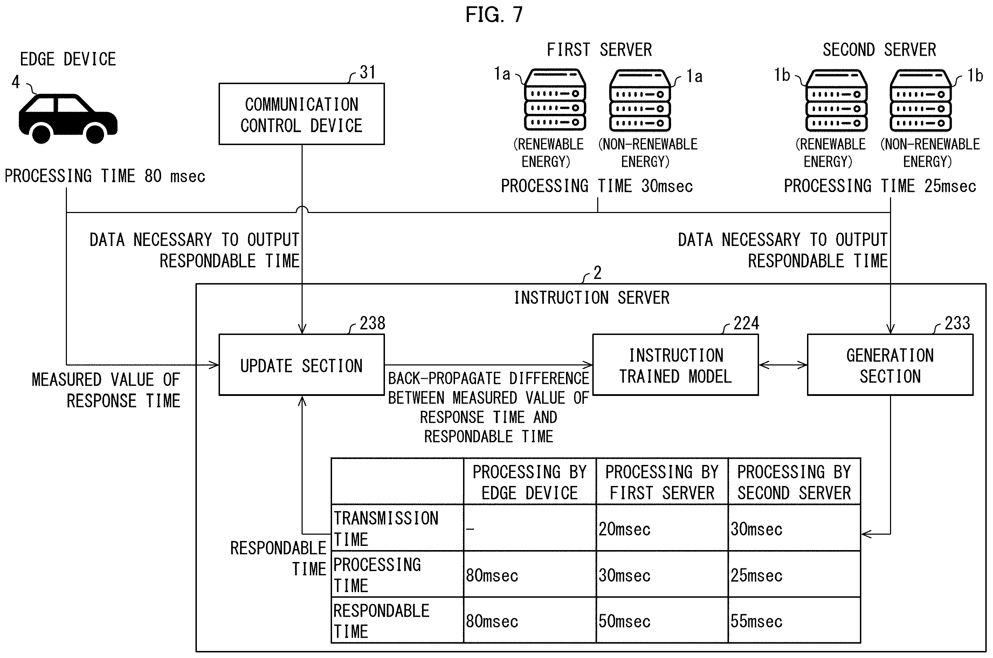

The update section 238 updates the instruction trained model 224 on the basis of the measured value of the response time obtained in the latest measurement. Specifically, as illustrated in, e.g., Fig. 7, the update section 238 trains (updates) the instruction trained model 224 by back-propagating a difference between the measured value of the response time and the respondable time. In other words, the measured value of the response time is correct answer data used to update the instruction trained model 224. This makes it possible to improve the prediction accuracy of the instruction trained model 224 or to maintain a state with high prediction accuracy.

### Effects of System

With the system 100 described above, on the basis of a request from the edge device 4, the processing server 1 carries out processing of specific information among a plurality of types of information necessary for the edge device 4 to operate. Therefore, with the system 100, it is possible to reduce the load on the edge device 4 and to reduce the power consumption of the edge device 4.

In addition, it is possible to execute processing at any location, as long as the system 100 can communicate with the edge device 4. Therefore, with the system 100, for example, it is possible to install the system 100 at a location close to a renewable energy power generation facility, which is often located in the suburbs because it is large, and to use renewable energy as electric power for operation.

In the system 100, the processing server 1 is implemented in a stateless manner (i.e., the processing server 1 is stateless). Therefore, with the system 100 including a plurality of processing servers 1, the processing capability can be easily enhanced by scaling out, or even when the edge device 4 moves, processing can be continued using the processing server 1 located nearby. As a result, it is possible to reduce an influence of interruption of communication between the processing server 1 and the edge device 4, thereby enhancing the reliability of the system 100.

### Edge Device

The edge device 4 in accordance with the present embodiment is a so-called "connected car". That is, the edge device 4 wirelessly communicates with the system 100 via the base station 32 of the communication network 3 when traveling on a road.

### Configuration of Edge Device

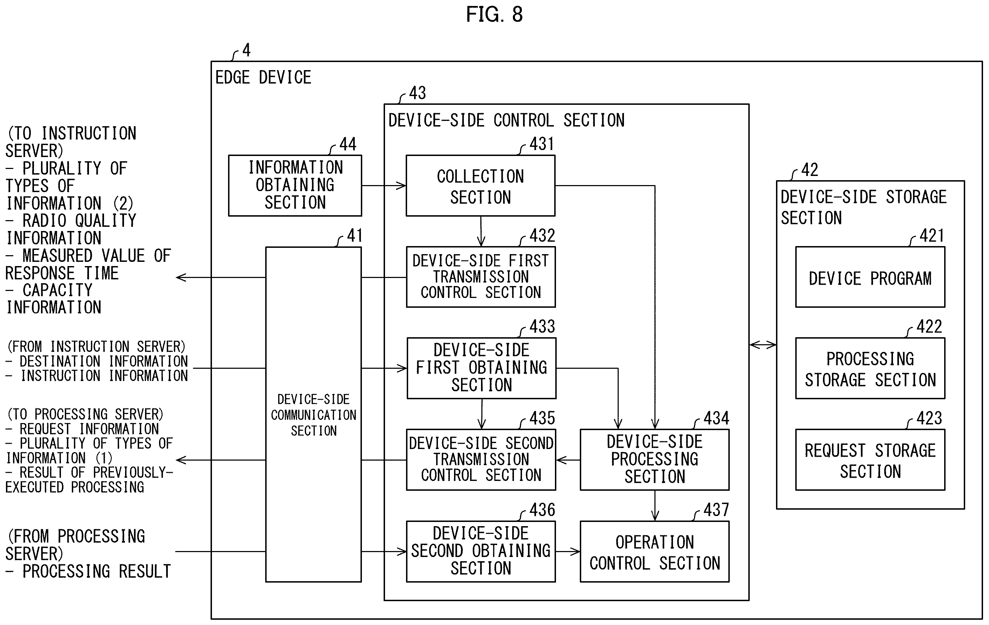

As illustrated in Fig. 8, the edge device 4 includes a device-side communication section 41 (communication section), a device-side storage section 42, a device-side control section 43, and an information obtaining section 44.

### Device-Side Communication Section

The device-side communication section 41 communicates with the system 100. Specifically, the device-side communication section 41 wirelessly communicates with the processing server 1 and the instruction server 2 via the communication network 3. The device-side communication section 41 in accordance with the present embodiment is constituted by a wireless communication module.

### Device-Side Storage Section

The device-side storage section 42 stores a device program 421 therein. The device-side storage section 42 also includes a processing storage section 422. The processing storage section 422 is an area for retaining a previous processing result. The device-side storage section 42 also includes a request storage section 423. The request storage section 423 is an area for retaining "request information" corresponding to "a plurality of types of information". The device-side storage section 42 in accordance with the present embodiment is constituted by a semiconductor memory, a hard disk, or the like.

The device program 421 describes an operation of the device-side control section 43 (particularly, the device-side processing section 434). The content of the processing part of the device program 421 is identical to that of the processing program 121 of the processing server 1. Consequently, for a single piece of specific information, it is possible to derive the same calculation result as that derived when the processing is carried out by the processing server 1.

### Information Obtaining Section

The information obtaining section 44 includes at least one selected from the group consisting of a camera, at least one type of sensor, and an interface. The camera captures an image of at least one of the outside and the inside of the edge device 4 and generates image data. The at least one type of sensor detects an operation of at least one selected from the group consisting of a steering wheel, an accelerator pedal, and a brake pedal, and generates a driving log thereof. The interface accepts input of various types of information (e.g., a driving route) by a person riding in the edge device 4.

### Device-Side Control Section

The device-side control section 43 includes a collection section 431, a device-side first transmission control section 432 (first transmission control section), a device-side first obtaining section 433 (first obtaining section), a device-side processing section 434 (processing section), a device-side second transmission control section 435 (second transmission control section), a device-side second obtaining section 436 (second obtaining section), and an operation control section 437. The device-side control section 43 in accordance with the present embodiment is constituted by a processor. Then, when the device program 421 stored in the device-side storage section 42 is executed by the device-side control section 43, the device program 421 can cause the device-side control section 43 to function as the control blocks 431 to 437.

### Collection Section

The collection section 431 collects a plurality of types of information. The plurality of types of information collected by the collection section 431 in accordance with the present embodiment include at least one of the plurality of types of information (1) (i.e., at least one selected from the group consisting of image data generated by the camera, a driving log, and various types of information having been accepted) and at least one of the plurality of types of information (2) (i.e., at least one selected from the group consisting of route information of the edge device 4, a PCI of a communicating base station 32, and an ECGI of the communicating base station 32). The collection section 431 in accordance with the present embodiment collects the radio quality information having been collected by the edge device 4. The collection section in accordance with the present embodiment collects, at regular intervals, the plurality of types of information and the radio quality information. The collection section 431 may be configured to collect the pieces of information all at once or may be configured to collect the pieces of information at different timings for the different pieces of information. The collection section 431 also generates pieces of capacity information for the respective plurality of types of information.

### Device-Side First Transmission Control Section

The device-side first transmission control section 432 controls the device-side communication section 41 to transmit, to the instruction server 2 of the system 100, the plurality of types of information (2) (i.e., the position information and the route information of the edge device 4, the PCI and the ECGI of the base station 32 which is a counterpart of the communication), the radio quality information collected by the edge device 4, the measured value of the response time, and the capacity information.

### Device-Side First Obtaining Section

The device-side first obtaining section 433 obtains the destination information and the instruction information from the instruction server 2 via the device-side communication section 41.

### Device-Side Processing Section

In a case where the destination information includes the edge device 4 as a destination (the processing server 1 does not satisfy the predetermined requirement), the device-side processing section 434 processes information corresponding to the destination information. The device-side processing section 434 is configured to be capable of carrying out various types of processing similar to that of the server-side processing section 133 of the processing server 1. The device-side processing section 434 in accordance with the present embodiment may execute at least a part of the processing on the basis of the instruction information. For example, in a case where the processing to be executed is object detection using Vision Transformer, the processing is divided into embedding processing and encoding processing. The embedding process is a process of dividing an image into patches and embedding the patches into vectors, respectively. The encoding process is a process of inputting the vectors to a transformer encoder after embedding the patches. In this case, the device-side processing section 434 executes the embedding process in the object detection. Then, the device-side second transmission control section 435 transmits, to the processing server 1 (system), request information for requesting execution of the encoding process in the object detection. The processing server 1 that has received the request processing carries out the encoding processing. Unlike object detection using a conventional convolutional neural network, Vision Transformer outputs, from a layer close to an input layer, data of smaller size than the input image. Thus, with such a configuration, it is possible to detect an object with the same accuracy as in the conventional techniques, while significantly reducing an amount of calculation by the device-side processing section 434 and a size of data transmitted to the processing server 1 during object detection.

On the basis of the request information stored in the request storage section 423, the device-side processing section 434 can process, by itself, the same information as the plurality of types of information transmitted to the processing server 1. The device-side processing section 434 processes the information by itself, in a case where the device-side communication section 41 has transmitted the request information and the plurality of types of information to the processing server 1 and the device-side second obtaining section 436 has not obtained a processing result from the processing server 1 before a predetermined period elapses.

### Device-Side Second Transmission Control Section

The device-side second transmission control section 435 controls the device-side communication section 41 to transmit, to the processing server 1, the request information based on the destination information and the instruction information. The device-side second transmission control section 435 also controls the device-side communication section 41 to transmit the plurality of types of information (1) to the processing server 1. As described above, the processing server 1 in accordance with the present embodiment is divided into the first server 1a and the second server 1b. Thus, the device-side second transmission control section 435 in accordance with the present embodiment controls, on the basis of the destination information obtained from the instruction server 2, the device-side communication section 41 to transmit the plurality of types of information (1) to a server specified by the destination information among the first server 1a and the second server 1b. The device-side second transmission control section 435 in accordance with the present embodiment transmits the request information such that, among the plurality of types of information, only the information corresponding to the request information is transmitted. This can prevent congestion in a communication band when transmitting the plurality of types of information.

Further, in a case where (a) processing of information is executed by the processing server 1 and (b) a result of previously-executed processing is necessary to execute the processing, the device-side second transmission control section 435 in accordance with the present embodiment also controls the device-side communication section 41 to transmit the previous processing result. As described above, the device-side processing section 434 may execute at least a part of the processing on the basis of the instruction information. In such a case, the device-side second transmission control section 435 in accordance with the present embodiment controls the device-side communication section 41 to transmit, to the processing server 1, specific information on which the part of processing has been executed. In a case where the specific information is, for example, image data, the specific information on which the part of processing has been executed becomes intermediate data that is output from an m-th layer and a layer number (m). Some layers may output intermediate data of a smaller data size than the input image. In a case where the request information does not include the processing server 1 as a destination (i.e., all pieces of information are processed by the edge device 4), the device-side second transmission control section 435 would not operate.

### Device-Side Second Obtaining Section

In a case where the processing server 1 processes the specific information, the device-side second obtaining section 436 obtains, from the processing server 1 via the device-side communication section 41, a processing result from the processing server 1. In a case where the processing server 1 carries out object detection based on image data, the image data serves as the specific information. Then, the device-side second obtaining section 436 obtains, as a processing result, information regarding the detected object. In addition, also in a case where the processing server 1 carries out object recognition, instance/semantic segmentation, image captioning, or the like, the image data serves as the specific information.

### Operation Control Section

The operation control section 437 carries out an operation based on a processing result from at least one of the device-side processing section 434 and the processing server 1. For example, in a case where the obtained processing result is information regarding the detected object, the operation control section 437 carries out an operation such as displaying the information on a display section in the edge device 4. In a case where the obtained processing result is setting/changing of a driving route, the operation control section 437 carries out an operation such as displaying, on the display section in the edge device 4, a route after the setting/changing. The operation control section 437 in accordance with the present embodiment stores the processing result in the processing storage section 422, and then carries out an operation on the basis of the stored processing result. By maintaining the processing result in the processing storage section 422 (managing the processing status on the edge device 4) in this manner, it is possible to continue the processing even if communication is interrupted or the processing server that has requested to carry out the processing is replaced with a server while the processing, which is completed through multiple processing steps, is in progress.

### Modification of Edge Device

The edge device 4 may be an autonomous vehicle that is capable of recognizing an object on the basis of information, making a determination on the basis of a recognition result, and traveling on the basis of a determination result. In this case, when the obtained processing result is information regarding a detected object, the operation control section 437 carries out driving (e.g., stopping or changing lanes) for the autonomous vehicle to avoid a collision with the object. Meanwhile, when the obtained processing result is setting/changing of a driving route, the operation control section 437 carries out driving (e.g., continuing the previous travel or changing the direction) for the autonomous vehicle to travel along the route after the setting/changing. An electric power required for the processing for such a driving vehicle (excluding the electric power required for traveling) is overwhelmingly larger than an electric power required for simple information exchange carried out by a connected car that does not have an autonomous driving function. Therefore, by carrying out the above operation, the processing server 1 executes at least a part of the processing with high power consumption, which makes it possible to reduce the power consumption of the edge device 4.

In a case where the edge device 4 is an autonomous vehicle, the autonomous vehicle may be one that carries out autonomous driving of level 4 or higher. An electric power required for processing for autonomous driving of level 4 or higher (excluding an electric power required for traveling) is overwhelmingly larger than that for autonomous driving of level 3 or lower. Therefore, with the above configuration, the processing server 1 executes at least a part of the processing with high power consumption. Thus, the above configuration can reduce the power consumption of the autonomous vehicle.

In a case where the edge device 4 is an autonomous vehicle, the autonomous vehicle may be an electric vehicle that uses electric power stored in a battery as a power source. With such a configuration, the processing server 1 executes at least a part of the processing with high power consumption. Therefore, the battery lasts longer (the cruising range becomes longer), as compared with a case where the autonomous vehicle carries out the entirety of recognition and determination.

### Effects of Edge Device

In accordance with the edge device 4 described above, a part of the processing of information necessary for the edge device 4 to operate is entrusted to the processing server 1 as needed. Therefore, in accordance with the edge device 4, it is possible to reduce the load on the edge device 4 and to reduce the power consumption of the edge device 4.

### Device Control Method

Next, the following will describe an embodiment of a device control method in accordance with another aspect of the present invention.

### Flow of Device Control Method

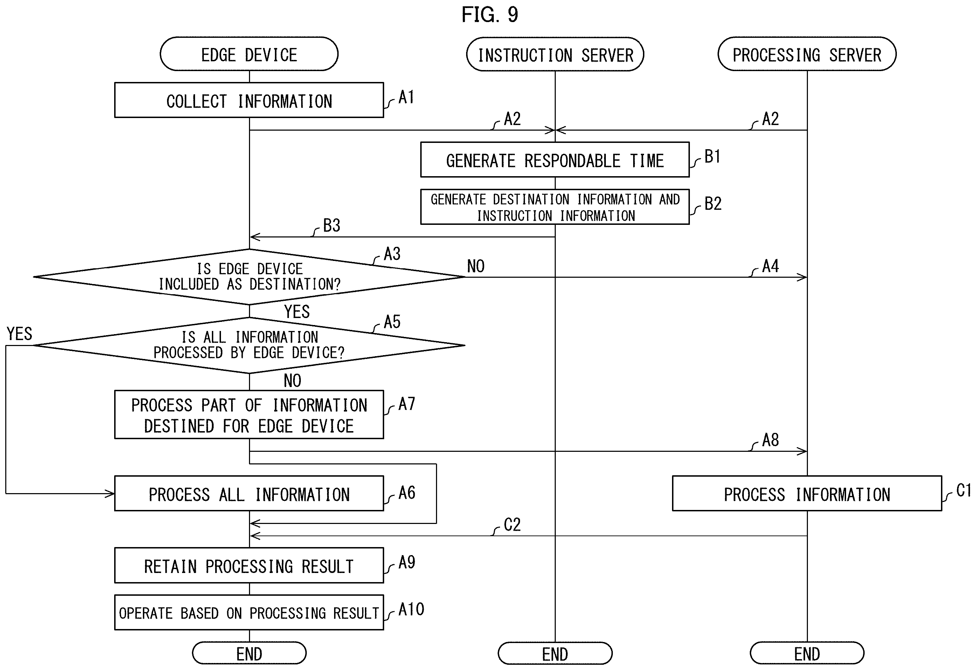

As illustrated in Fig. 9, the device control method includes a collection step A1, a reception step A2, a generation step B1, a first determination step B2, a first transmission step B3, a second determination step A3, a second transmission step A4, a third determination step A5, a first processing step A6, a second processing step A7, a third transmission step A8, a third processing step C1, a fourth transmission step C2, a retaining step A9, and an operation step A10.

### Collection Step

In the collection step A1, which will be carried out first, a plurality of types of information (i.e., (a) at least one of the plurality of types of information (1) (at least one selected from the group consisting of image data generated by a camera, a driving log, and various types of information having been accepted) and (b) at least one of the plurality of types of information (2) (at least one selected from the group consisting of route information of the edge device 4, a PCI of a base station 32 which is a counterpart of the communication, and an ECGI of the base station 32 which is the counterpart of the communication)) are collected. In the collection step A1, the radio quality information having been collected by the edge device 4 is also collected. In the collection step A1, capacity information of the collected information is generated. The collection of the information is carried out by the edge device 4.

### Reception Step

After the information is collected, the reception step A2 is carried out. In the reception step A2, the instruction server 2 receives, from, e.g., the edge device 4, the position information and the route information of the edge device 4, the PCI and the ECGI of the base station 32 which is the counterpart of the communication, the radio quality information having been collected by the edge device 4, a measured value of a response time, and the capacity information. In the reception step A2 in accordance with the present embodiment, the instruction server 2 also receives a resource usage status from, e.g., the processing server 1. In the reception step A2 in accordance with the present embodiment, the instruction server 2 also receives, from, e.g., the communication control device 31, the position information of the base station 32, the radio quality information having been collected by the base station, and a transmission delay time in a wired section.

### Generation Step

After the various types of information are transmitted to the instruction server 2, the process proceeds to the generation step B1. In the generation step B1, a respondable time required from a time point that the edge device starts transmission control to a time point that the edge device obtains a result of corresponding processing is generated. The respondable time is generated on the basis of the position information of the base station 32, the radio quality information having been collected by the base station 32, the transmission delay time, the position information of the edge device 4, the PCI and ECGI of the base station 32 which is the counterpart of the communication, the radio quality information having been collected by the edge device 4, and the capacity information indicative of a capacity of the information. In the generation step B1 in accordance with the present embodiment, a respondable time observed when the processing is executed by the first server 1a and a respondable time observed when the processing is executed by the second server 1b are generated for each of the plurality of types of information on the basis of the resource usage status. The respondable time is generated by, for example, the instruction server 2.

### First Determination Step

After the respondable time is generated, the process proceeds to the first determination step B2. In the first determination step B2, it is determined whether or not the information satisfies a predetermined requirement, and destination information and instruction information are generated on the basis of a result of the determination. The determination as to whether the predetermined requirement is satisfied and the generation of the destination information and the instruction information are carried out by, for example, the instruction server 2.

### First Transmission Step

After the destination information and the instruction information are generated, the process proceeds to the first transmission step B3. In the first transmission step B3, the destination information and the instruction information are transmitted to the edge device 4. The transmission of the destination information and the instruction information is carried out by, for example, the instruction server 2.

### Second Determination Step

After the destination information and the instruction information are transmitted, the process proceeds to the second determination step A3. In the second determination step A3, it is determined whether or not the destination information includes the edge device 4 as a destination. The determination is carried out by, for example, the edge device 4.

### Second Transmission Step

If it is determined that the destination information does not include the edge device 4 as a destination (A3: NO), the process proceeds to the second transmission step A4. In the second transmission step A4, request information based on the destination information and the instruction information is transmitted to the processing server 1. In the second transmission step A4, all pieces of information that need to be processed are transmitted to the processing server 1. In a case where the processing server 1 is constituted by a first server 1a, a second server 1b, ... , information corresponding to the request information is transmitted to, from among the first server 1a, the second server 1b, ... , a server specified by the destination information on the basis of the destination information. The transmission of the request information, the instruction information, and the information corresponding to the request information is carried out by, for example, the edge device 4. In a case where a result of previously-executed processing is necessary to process information, the previous processing result is also transmitted in the second transmission step A4.

### Third Determination Step

If it is determined, in the second determination step A3, that the destination information includes the edge device 4 as the destination (A3: YES), the process proceeds to the third determination step A5. In the third determination step A5, it is determined whether or not all the pieces of information that need to be processed are to be processed by the edge device. The determination is carried out by, for example, the edge device 4.

### First Processing Step

If it is determined, in the third determination step A5, that the edge device 4 processes all the pieces of information that need to be processed (A5: YES), the process proceeds to the first processing step A6. In the first processing step A6, the edge device 4 processes all the pieces of information that need to be processed.

### Second Processing Step

If it is determined, in the third determination step A5, that the edge device 4 does not process all the pieces of information that need to be processed (A5: NO), the process proceeds to the second processing step A7. In the second processing step A7, the edge device 4 processes a part of all the pieces of information that need to be processed which part corresponds to the destination information (which part is destined for the edge device 4).

### Third Transmission Step

After the edge device 4 processes a part of the information corresponding to the destination information, the process proceeds to the third transmission step A8. In the third transmission step A8, the instruction information based on the request information and the destination information is transmitted to the processing server 1. In the third transmission step A8, the remaining information that has not been processed by the edge device 4 is transmitted to the processing server 1. In a case where the processing server 1 is constituted by a first server 1a, a second server 1b, ... , information corresponding to the request information is transmitted to, from among the first server 1a, the second server 1b, ... , a server specified by the destination information on the basis of the destination information. The transmission of the request information, the instruction information, and the information corresponding to the request information is carried out by the edge device 4. In a case where a result of previously-executed processing is necessary to process information, the previous processing result is also transmitted in the third transmission step A8.

### Third Processing Step

After the request information is transmitted, the process proceeds to the third processing step C1. In the third processing step C1, specific information among the plurality of types of information is processed. The processing of the information is carried out by, for example, the processing server 1.

### Fourth Transmission Step

In a case where the specific information is processed in the third processing step C1, the process proceeds to the fourth transmission step C2. In the fourth transmission step C2, a processing result is transmitted to the edge device 4. The transmission of the processing result is carried out by, for example, the processing server 1.

### Retaining Step

After the first processing step A6 (i.e., processing of all the pieces of information), after the fourth transmission step C2 (i.e., transmission of all the processing results), or after the second processing step A7 (processing of a part of the information) and the fourth transmission step C2 (transmission of a part of the processing results), the process proceeds to the retaining step A9. In the retaining step A9, the processing result obtained as a result of the processing carried out in the first processing step A6, the processing result transmitted in the fourth transmission step C2, or the processing result obtained as a result of the processing carried out in the second processing step A7 and the processing result transmitted in the fourth transmission step C2 is retained. The retaining of the processing result is carried out by the edge device 4.

### Operation Step

After the processing result is retained, the process proceeds to the operation step A10. In the operation step A10, an operation based on the processing result retained in the retaining step A9 is carried out. The operation is carried out by the edge device 4.

### Effects of Device Control Method

With the device control method described above, on the basis of a request from the edge device 4, the processing server 1 executes processing of specific information among a plurality of types of information necessary for the edge device 4 to operate. Therefore, in accordance with the device control method, it is possible to reduce the load on the edge device 4 and to reduce the power consumption of the edge device 4.

In addition, the processing server 1 can execute processing at any location, as long as the system 100 can communicate with the edge device 4. Therefore, for example, it is possible to install the processing server 1 at a location closer to a renewable energy power generation facility, which is often located in the suburbs since it is large, and to use renewable energy as electric power for operation.

### Variations of the Present Invention

The present invention is not limited to the embodiments, but can be altered by a skilled person in the art within the scope of the claims. The present invention also encompasses, in its technical scope, any embodiment derived by combining technical means disclosed in differing embodiments.

For example, the system 100 in accordance with the above-described embodiment is configured such that the communication section, the first obtaining section, the second obtaining section, the processing section, and the transmission control section are configured by the processing server 1 (as the processing-side first obtaining section 131, the processing-side second obtaining section 132, the server-side processing section 133, and the processing-side transmission control section 134). Alternatively, however, the system 100 may be configured such that the communication section, the first obtaining section, the second obtaining section, the processing section, and the transmission control section are configured by another edge device 4A. That is, the processing section of the another edge device 4A is capable of processing a plurality of types of information by a method which is at least identical to that of the edge device 4. The "method which is at least identical to that of the edge device 4" refers to not only a case where these methods have a completely identical feature(s) but also a case where the method has a more advanced feature(s) than the method of the edge device 4 (but is also capable of carrying out the method of the edge device). The expression "configured by another edge device 4A" means that at least one of offload destinations of the edge device 4 in the system 100 is another edge device.

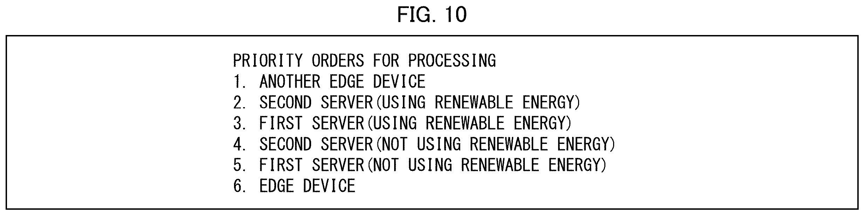

In this case, the instruction server 2 also communicates with the another edge device 4A. Then, the instruction server 2 obtains a plurality of types of information (2) and a resource usage status from the another edge device 4A, generates a respondable time on the basis of the resource usage status and/or the like, and updates the delay table 223. Then, the instruction server 2 determines a content (destination) of destination information in accordance with predetermined priority orders. In a case where the another edge device 4A is included as an offload destination candidate, the predetermined priority orders are set so that the another edge device 4A is included therein, as illustrated in, e.g., Fig. 10. The list of the priority orders shown in Fig. 10 includes only one type of another edge device 4A. Alternatively, however, a plurality of other edge devices 4A may be set as offload destination candidates. In this case, similarly to the processing server 1, a renewable energy-powered device that operates by using electric power supplied from a generator that generates electric power using renewable energy may be set as at least one of the other edge devices 4A.

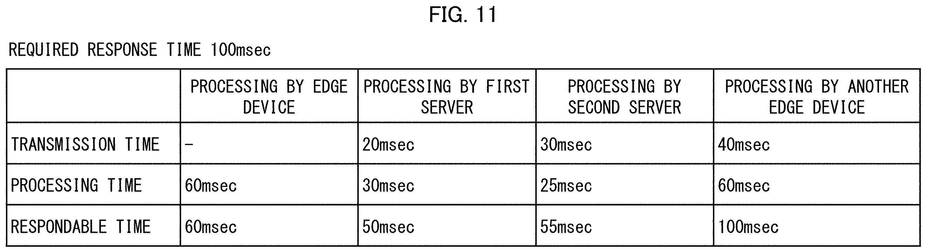

For example, in a case where (a) the required response time is set at 100 msec, (b) the delay table 223 as illustrated in Fig. 11 is obtained (i.e., the predetermined requirement is satisfied in any of the case where processing is executed by the first server 1a, the case where processing is executed by the second server 1b, and the case where processing is executed by another edge device 4A), and (c) the predetermined priority orders are set as illustrated in Fig. 10 (i.e., a priority order of the another edge device 4A is higher than that of the processing server 1), the instruction server 2 generates destination information that defines, as a destination, another edge device having a highest priority order. In a case where (a) the required response time is set at less than 100 msec and (b) the delay table 223 as illustrated in Fig. 11 is obtained, the another edge device 4A does not satisfy the predetermined requirement and the another edge device 4A cannot be defined as the destination. Thus, the instruction server 2 generates destination information with which the first server 1a, which is a renewable energy-powered server, is defined as the destination. Meanwhile, in a case where both the processing server 1 and the another edge device 4A do not satisfy the predetermined requirement, the instruction server 2 generates destination information indicative of the edge device 4 as a destination.

With the system 100 in accordance with the present embodiment, in a case where processing is offloaded from the edge device 4 to the processing server 1, the edge device 4 transmits specific information to the first server 1a (MEC) or the second server 1b (cloud server). The first server 1a or the second server 1b that has received the specific information starts the processing. Then, the first server 1a or the second server 1b sends a processing result back to the edge device 4. Meanwhile, in a case where processing is offloaded from the edge device 4 to the another edge device 4A, the edge device 4 transmits specific information to the first server 1a. The first server 1a that has received the specific information transfers the specific information to the another edge device 4A. Then, the another edge device 4A starts the processing. Thereafter, the another edge device 4A sends a processing result back to the first server 1a. The first server 1a that has received the processing result transfers the processing result to the edge device 4. Note that the exchange between the edge device 4 and the another edge device 4A may be carried out via the second server 1b.

Conventionally, one of the types of processing that is most affected (receives the most benefit) when the processing is offloaded is AI processing using a trained model (for example, object detection using an image). The reason is that AI processing consumes a large amount of electric power and uses a large amount of computing resources. However, even the same types of AI processing have greatly different structures and parameters of the trained model used, depending on the information processing service which is provided. For this reason, it is basically not possible to reuse the trained model. Thus, in order to execute AI processing on a processing server that does not have a trained model or parameters, it is necessary to download the trained model and parameters before the AI processing, which causes a delay in offloading. On the other hand, preparing one or more servers that can deal with all types of AI processing had a problem in terms of cost. However, by employing the above configuration, other edge device(s) 4A having a processing function equal to or higher than that of the edge device 4 is/are utilized. This makes it possible to offload the processing even without downloading AI structure data or weight data.

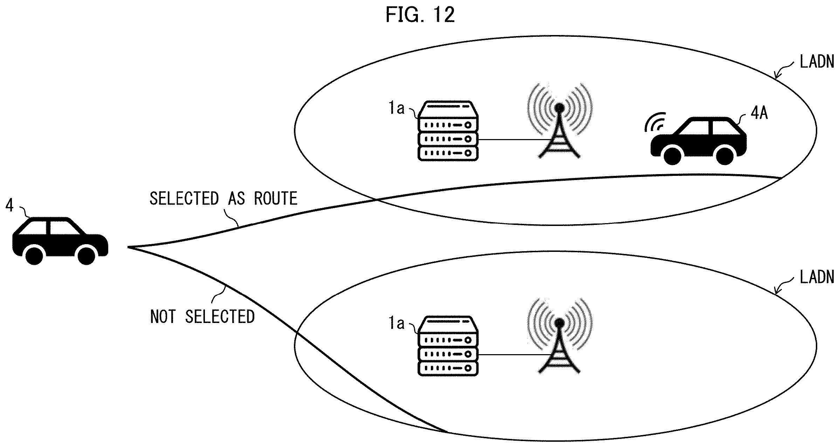

The system 100 may include a formulating section that formulates a travel route of the edge device 4. In this case, the edge device 4 may be a vehicle 4 having a navigation function or an autonomous driving function. Alternatively, the edge device 4 may be (a) a mobile terminal (e.g., a smartphone) having a map guidance function or (b) a moving means (e.g., a drone) having a function of traveling autonomously, other than a vehicle. The formulating section is preferably provided in at least one of the server-side processing section 133 and the device-side processing section 434. However, this is not limitative. The formulating section formulates a travel route by selecting a road where a condition for communicating with another edge device 4A is relatively favorable. This makes it possible to further utilize the same type of edge device(s) that do not require downloading AI structure data or weight data. Specifically, as illustrated in Fig. 10, in a case where a priority order of another edge device 4A is higher than that of the processing server 1, the road where a condition is relatively favorable may be, e.g., a road that passes through an area of a local area data network (LADN; an area of a cell formed by a base station to which the first server 1a is connected) that has a first server 1a and that is communicable with the another edge device 4A (however, both the edge device 4 and the another edge device 4A need to carry out cellular communication), as illustrated in Fig. 12. In a case where the priority order of the processing server 1 is higher than that of the another edge device 4A, the road where a condition is relatively favorable may be, e.g., a road that passes through an area of an LADN that has the first server 1a with sufficient computing resources. Further, the road where a condition is relatively favorable may also be a road that passes through an area of an LADN that has a first server 1a connected to a second server 1b with sufficient computing resources. In a case where a priority order of a renewable energy-powered server is high, the road where a condition is relatively favorable may be, e.g., a road that passes through an area of an LADN that has a renewable energy-powered server. In this case, the operation control section 437 steers the vehicle so as to pass through the travel route planned by the formulating section.

The system 100 in accordance with the above-described embodiment includes a server (processing server 1) having a function of carrying out processing of specific information and a server (instruction server 2) having a function of generating a respondable time. However, the system 100 may include a single server that has both of these functions.

The processing server 1 may be integrated with the communication control device 31 of the communication network 3. At least a part of the control blocks of the processing server 1 may be included in the communication control device 31. Conversely, at least a part of the control blocks of the communication control device 31 may be included in the processing server 1.

Some of or all of the functions of the control blocks may also be realized by a logic circuit. For example, the scope of the present invention also includes an integrated circuit in which a logic circuit that functions as each of the control blocks is formed. In addition, for example, the functions of the control blocks may also be realized by a quantum computer.

The effects given by each aspect of the present invention described above also contribute to achievement of, for example, Goal 7 "Ensure access to affordable, reliable, sustainable and modern energy for all," Goal 9 "Build resilient infrastructure, promote inclusive and sustainable industrialization and foster innovation," and Goal 13 "Climate Action" of the Sustainable Development Goals (SDGs) advocated by the United Nations.

A system in accordance with a first aspect of the present invention is a system including: a communication section that communicates with an edge device which is capable of collecting information and processing the information and which carries out an operation on a basis of the information thus processed; a first obtaining section that obtains, from the edge device via the communication section, at least one of a plurality of types of information having been collected by the edge device; a second obtaining section that is capable of obtaining, from the edge device via the communication section, request information for requesting execution of processing of specific information included in the plurality of types of information; a processing section that processes the specific information in a case where the second obtaining section obtains the request information; and a transmission control section that controls, in a case where the processing section processes the specific information, the communication section to transmit a result of the processing to the edge device.

A system in accordance with a second aspect of the present invention may be configured such that, in the first aspect, the system further includes: a determination section that (a) determines, for each of the plurality of types of information, whether or not a predetermined requirement is satisfied, and (b) generates destination information and instruction information on a basis of a result of the determination, the destination information being indicative of at least one destination to which the edge device transmits the plurality of types of information, and the instruction information being indicative of a part of the plurality of types of information which part is to be processed by the edge device; and a second transmission control section that controls the communication section to transmit the destination information and the instruction information to the edge device.

A system in accordance with a third aspect of the present invention may be configured such that, in the second aspect, the system further includes: a generation section that generates a respondable time for each of the plurality of types of information on a basis of position information for identifying a base station which is a counterpart of the communication, radio quality information having been collected by the base station, a transmission delay time in a wired section between a communication control device and the system, position information of the edge device, radio quality information having been collected by the edge device, and capacity information indicative of a capacity of the plurality of types of information, the respondable time being required from a time point that the edge device starts transmission control to a time point that the edge device obtains a result of corresponding processing, wherein in a case where (a) no abnormal situation has occurred and (b) the respondable time is shorter than a predetermined required response time or no required response time is set for information which is to be processed, the determination section determines that the predetermined requirement is satisfied.

A system in accordance with a fourth aspect of the present invention may be configured such that, in the third aspect, in a case where (a) no abnormal situation has occurred, (b) the respondable time is shorter than the predetermined required response time or no required response time is set for information which is to be processed, and (c) a computing resource of the system is sufficient, the determination section determines that the predetermined requirement is satisfied; and in a case where (a) no abnormal situation has occurred, (b) the respondable time is shorter than the required response time, and (c) the computing resource is not sufficient, the determination section generates the destination information indicative of the system and the edge device as destinations and instruction information for instructing the edge device to process a shortage of the computing resource.

A system in accordance with a fifth aspect of the present invention may be configured such that, in the third aspect, the system further includes: a trained model constructed by carrying out machine learning of a relation between (a) position information of the base station, (b) position information of the edge device, (c) a distance of a radio section between the edge device and the base station, (d) the radio quality information having been collected by the base station, (e) the radio quality information having been collected by the edge device, (f) a transmission delay time in a wired section between the communication control device and a processing server, (g) a data capacity of information having been processed, and (h) a response time having been taken for communication between the processing server and the edge device during the processing, each of these pieces of information having been obtained in past communications, wherein the generation section generates the respondable time by using the trained model.

A system in accordance with a sixth aspect of the present invention may be configured such that, in the fifth aspect, the system further includes: an update section that updates the trained model on a basis of a measured value of a response time obtained in latest measurement.

A system in accordance with a seventh aspect of the present invention may be configured such that, in any one of the first to sixth aspects, the first obtaining section is capable of obtaining, as one of the plurality of types of information, information whose data capacity has been reduced by the edge device.

A system in accordance with an eighth aspect of the present invention may be configured such that, in any one of the third to sixth aspects, the system further includes: at least one first server in which a time required for the first obtaining section to obtain information is relatively short and a time required for the processing section to process information is relatively long; and at least one second server in which a time required for the first obtaining section to obtain information is longer than in the at least one first server and a time required for the processing section to process information is shorter than in the at least one first server, wherein the generation section generates, for each of the plurality of types of information, (a) the respondable time required in a case where the at least one first server executes processing and (b) the respondable time required in a case where the at least one second server executes processing.

A system in accordance with a ninth aspect of the present invention may be configured such that, in the eighth aspect, at least one of the at least one first server and the at least one second server comprises a plurality of first servers or a plurality of second servers; at least one server selected from the group consisting of the plurality of first servers and the plurality of second servers is a renewable energy-powered server that operates using electric power supplied from a generator that generates electric power using renewable energy; and in a case where (a) there are a plurality of servers in which the respondable time is shorter than the required response time and (b) the plurality of servers include the renewable energy-powered server, the determination section generates the destination information that defines the renewable energy-powered server as a destination.

A system in accordance with a tenth aspect of the present invention may be configured such that, in the eighth aspect, at least one of the at least one first server and the at least one second server is stateless.

A system in accordance with an eleventh aspect of the present invention may be configured such that, in the tenth aspect, in a case where (a) processing of the plurality of types of information is executed by at least one of the at least one first server and the at least one second server and (b) a result of processing similar to previous processing is necessary to execute the processing, the first obtaining section obtains, from the edge device via the communication section, the result of the processing similar to the previous processing.

A system in accordance with a twelfth aspect of the present invention may be configured such that, in any one of the first to eleventh aspects, the communication section, the first obtaining section, the second obtaining section, the processing section, and the transmission control section are configured by another edge device that is capable of processing the plurality of types of information by a method which is at least identical to that of the edge device.

A system in accordance with a thirteenth aspect of the present invention may be configured such that, in the twelfth aspect, the edge device includes a formulating section that formulates a travel route of the edge device; the edge device is a vehicle traveling on a road; and the formulating section formulates the travel route by selecting a road where a condition for communicating with the another edge device is relatively favorable.

A program in accordance with a fourteenth aspect of the present invention is a program for causing a computer to function as the system recited in any one of the first to thirteenth aspects, the program causing the computer to function as the first obtaining section, the second obtaining section, the processing section, and the transmission control section.

A system in accordance with a fifteenth aspect of the present invention is a system including: a communication section that communicates with a vehicle which is capable of collecting information and processing the information and which carries out an operation on a basis of the information thus processed; a first obtaining section that obtains, from the vehicle via the communication section, at least one of a plurality of types of information having been collected by the vehicle; a second obtaining section that is capable of obtaining, from the vehicle via the communication section, request information for requesting execution of processing of specific information included in the plurality of types of information; a processing section that processes the specific information in a case where the second obtaining section obtains the request information; and a transmission control section that controls, in a case where the processing section processes the specific information, the communication section to transmit a result of the processing to the vehicle.

An edge device in accordance with a sixteenth aspect of the present invention may be an edge device including: a communication section that communicates with a system recited in any one of the first to fifteenth aspects; a collection section that collects a plurality of types of information; a first transmission control section that controls the communication section to transmit, to the system, position information of the edge device, radio quality information having been collected by the edge device, and capacity information indicative of a capacity of the plurality of types of information; a first obtaining section that obtains, from the system via the communication section, destination information and instruction information, the destination information being indicative of at least one destination to which the edge device transmits the plurality of types of information, and the instruction information being indicative of a part of the plurality of types of information which part is to be processed by the edge device; a processing section that processes information corresponding to the destination information, in a case where the destination information includes the edge device as a destination; a second transmission control section that controls the communication section to transmit, to the system, request information based on the destination information and the instruction information; a second obtaining section that obtains, in a case where the system processes the specific information, a result of the processing by the system from the system via the communication section; and an operation control section that carries out an operation on a basis of a result of processing executed by at least one of the processing section and the system.

An edge device in accordance with a seventeenth aspect of the present invention may be configured such that, in the sixteenth aspect, the processing section executes processing in object detection using Vision Transformer, the processing dividing image data into a plurality of patches and embedding the patches into vectors, respectively; and the processing section transmits, to the system, request information for requesting execution of processing in the object detection, the processing inputting the vectors to a transformer encoder.

An edge device in accordance with an eighteenth aspect of the present invention may be configured such that, in the sixteenth or seventeenth aspect, the edge device further includes: a processing storage section that retains, for the processing of the information, a result of previously executed processing, wherein in a case where (a) the processing of the information is executed by the system and (b) the result of the previously-executed processing is necessary to execute the processing, the second transmission control section controls the communication section to also transmit the result of the previously-executed processing.

### Reference Signs List

- 100:: system
- 1:: processing server
- 1a:: first server
- 11:: processing-side communication section
- 12:: processing-side storage section
- 121:: processing program
- 122:: processing trained model
- 13:: processing-side control section
- 131:: processing-side first obtaining section (first obtaining section)
- 132:: processing-side second obtaining section (second obtaining section)
- 133:: server-side processing section (processing section)
- 134:: processing-side transmission control section (transmission control section)
- 135:: resource monitoring section
- 1b:: second server
- 2:: instruction server
- 21:: instruction-side communication section
- 22:: instruction-side storage section
- 221:: instruction program
- 222:: base station database
- 223:: delay table
- 224:: instruction trained model
- 23:: instruction-side control section
- 231:: instruction-side first obtaining section
- 232:: instruction-side second obtaining section
- 233:: generation section
- 233a:: preprocessing section
- 233b:: inference section
- 234:: load balancing section
- 235:: determination section
- 236:: instruction-side transmission control section
- 237:: instruction-side third obtaining section
- 238:: update section
- 3:: communication network
- 31:: communication control device
- 32:: base station
- 4:: edge device
- 41:: device-side communication section
- 42:: device-side storage section
- 421:: device program
- 422:: processing storage section
- 423:: request storage section
- 43:: device-side control section
- 431:: collection section
- 432:: device-side first transmission control section
- 433:: device-side first obtaining section
- 434:: device-side processing section
- 435:: device-side second transmission control section
- 436:: device-side second obtaining section
- 437:: operation control section
- 44:: information obtaining section

## Claims

1. A system comprising:
a communication section that communicates with an edge device which is capable of collecting information and processing the information and which carries out an operation on a basis of the information thus processed;
a first obtaining section that obtains, from the edge device via the communication section, at least one of a plurality of types of information having been collected by the edge device;
a second obtaining section that is capable of obtaining, from the edge device via the communication section, request information for requesting execution of processing of specific information included in the plurality of types of information;
a processing section that processes the specific information in a case where the second obtaining section obtains the request information; and
a transmission control section that controls, in a case where the processing section processes the specific information, the communication section to transmit a result of the processing to the edge device.

2. The system according to claim 1, further comprising:
a determination section that (a) determines, for each of the plurality of types of information, whether or not a predetermined requirement is satisfied, and (b) generates destination information and instruction information on a basis of a result of the determination, the destination information being indicative of at least one destination to which the edge device transmits the plurality of types of information, and the instruction information being indicative of a part of the plurality of types of information which part is to be processed by the edge device; and
a second transmission control section that controls the communication section to transmit the destination information and the instruction information to the edge device.

3. The system according to claim 2, further comprising:
a generation section that generates a respondable time for each of the plurality of types of information on a basis of position information for identifying a base station which is a counterpart of the communication, radio quality information having been collected by the base station, a transmission delay time in a wired section between a communication control device and the system, position information of the edge device, radio quality information having been collected by the edge device, and capacity information indicative of a capacity of the plurality of types of information, the respondable time being required from a time point that the edge device starts transmission control to a time point that the edge device obtains a result of corresponding processing, wherein
in a case where (a) no abnormal situation has occurred and (b) the respondable time is shorter than a predetermined required response time or no required response time is set for information which is to be processed, the determination section determines that the predetermined requirement is satisfied.

4. The system according to claim 3, wherein:
in a case where (a) no abnormal situation has occurred, (b) the respondable time is shorter than the predetermined required response time or no required response time is set for information which is to be processed, and (c) a computing resource of the system is sufficient, the determination section determines that the predetermined requirement is satisfied; and
in a case where (a) no abnormal situation has occurred, (b) the respondable time is shorter than the required response time, and (c) the computing resource is not sufficient, the determination section generates the destination information indicative of the system and the edge device as destinations and instruction information for instructing the edge device to process a shortage of the computing resource.

5. The system according to claim 3, further comprising:
a trained model constructed by carrying out machine learning of a relation between (a) position information of the base station, (b) position information of the edge device, (c) a distance of a radio section between the edge device and the base station, (d) the radio quality information having been collected by the base station, (e) the radio quality information having been collected by the edge device, (f) a transmission delay time in a wired section between the communication control device and a processing server, (g) a data capacity of information having been processed, and (h) a response time having been taken for communication between the processing server and the edge device during the processing, each of these pieces of information having been obtained in past communications, wherein
the generation section generates the respondable time by using the trained model.

6. The system according to claim 5, further comprising:
an update section that updates the trained model on a basis of a measured value of a response time obtained in latest measurement.

7. The system according to claim 1, wherein:
the first obtaining section is capable of obtaining, as one of the plurality of types of information, information whose data capacity has been reduced by the edge device.

8. The system according to any one of claims 3 to 6, further comprising:
at least one first server in which a time required for the first obtaining section to obtain information is relatively short and a time required for the processing section to process information is relatively long; and
at least one second server in which a time required for the first obtaining section to obtain information is longer than in the at least one first server and a time required for the processing section to process information is shorter than in the at least one first server, wherein
the generation section generates, for each of the plurality of types of information, (a) the respondable time required in a case where the at least one first server executes processing and (b) the respondable time required in a case where the at least one second server executes processing.

9. The system according to claim 8, wherein:
at least one of the at least one first server and the at least one second server comprises a plurality of first servers or a plurality of second servers;
at least one server selected from the group consisting of the plurality of first servers and the plurality of second servers is a renewable energy-powered server that operates using electric power supplied from a generator that generates electric power using renewable energy; and
in a case where (a) there are a plurality of servers in which the respondable time is shorter than the required response time and (b) the plurality of servers include the renewable energy-powered server, the determination section generates the destination information that defines the renewable energy-powered server as a destination.

10. The system according to claim 8, wherein:
at least one of the at least one first server and the at least one second server is stateless.

11. The system according to claim 10, wherein:
in a case where (a) processing of the plurality of types of information is executed by at least one of the at least one first server and the at least one second server and (b) a result of processing similar to previous processing is necessary to execute the processing, the first obtaining section obtains, from the edge device via the communication section, the result of the processing similar to the previous processing.

12. The system according to any one of claims 1 to 3, wherein:
the communication section, the first obtaining section, the second obtaining section, the processing section, and the transmission control section are configured by another edge device that is capable of processing the plurality of types of information by a method which is at least identical to that of the edge device.

13. The system according to claim 12, further comprising:
a formulating section that formulates a travel route of the edge device, wherein
the formulating section formulates the travel route by selecting a road where a condition for communicating with the another edge device is relatively favorable.

14. A program for causing a computer to function as a system recited in claim 1, the program causing the computer to function as the first obtaining section, the second obtaining section, the processing section, and the transmission control section.

15. A system comprising:
a communication section that communicates with a vehicle which is capable of collecting information and processing the information and which carries out an operation on a basis of the information thus processed;
a first obtaining section that obtains, from the vehicle via the communication section, at least one of a plurality of types of information having been collected by the vehicle;
a second obtaining section that is capable of obtaining, from the vehicle via the communication section, request information for requesting execution of processing of specific information included in the plurality of types of information;
a processing section that processes the specific information in a case where the second obtaining section obtains the request information; and
a transmission control section that controls, in a case where the processing section processes the specific information, the communication section to transmit a result of the processing to the vehicle.

16. An edge device comprising:
a communication section that communicates with a system recited in claim 1;
a collection section that collects a plurality of types of information;
a first transmission control section that controls the communication section to transmit, to the system, position information of the edge device, radio quality information having been collected by the edge device, and capacity information indicative of a capacity of the plurality of types of information;
a first obtaining section that obtains, from the system via the communication section, destination information and instruction information, the destination information being indicative of at least one destination to which the edge device transmits the plurality of types of information, and the instruction information being indicative of a part of the plurality of types of information which part is to be processed by the edge device;
a processing section that processes information corresponding to the destination information, in a case where the destination information includes the edge device as a destination;
a second transmission control section that controls the communication section to transmit, to the system, request information based on the destination information and the instruction information;
a second obtaining section that obtains, in a case where the system processes the specific information, a result of the processing by the system from the system via the communication section; and
an operation control section that carries out an operation on a basis of a result of processing executed by at least one of the processing section and the system.

17. The edge device according to claim 16, wherein:
the processing section executes processing in object detection using Vision Transformer, the processing dividing image data into a plurality of patches and embedding the patches into vectors, respectively; and
the processing section transmits, to the system, request information for requesting execution of processing in the object detection, the processing inputting the vectors to a transformer encoder.

18. The edge device according to claim 16 or 17, further comprising:
a processing storage section that retains, for the processing of the information, a result of previously executed processing, wherein
in a case where (a) processing of information is executed by the system and (b) the result of the previously-executed processing is necessary to execute the processing, the second transmission control section controls the communication section to also transmit the result of the previously-executed processing.
